# FASCICULE DE BREVET EUROPEEN

(11) **EP 2 479 463 B1**
(45) Date de publication et mention de la délivrance du brevet: **07.08.2013**
(21) Numéro de dépôt: 12152151.2
(22) Date de dépôt: 23.01.2012
(51) Int. Cl.: F16K 17/16, H01H 33/56, H02B 13/025, F16K 17/14

(54) **Soupape de limitation de pression, en particulier pour cellule moyenne tension**
Druckbegrenzungsventil, insbesondere für Mittelspannungszelle
Pressure limiting valve, in particular for a medium-voltage cell

(30) Priorité: 25.01.2011 FR 1150573
(43) Date de publication de la demande: 25.07.2012
(73) Titulaire: Schneider Electric Industries SAS, 92500 Rueil-Malmaison (FR)
(72) Inventeur: Voisin, Cyril, 38050 Grenoble Cedex 9 (FR)
(74) Mandataire: Ilgart, Jean-Christophe

(56) Documents cités:
- DD-A1- 206 263
- DE-A1- 3 615 169
- FR-A1- 2 944 134
- GB-A- 657 255
- US-A- 4 385 710

## Description

### DOMAINE TECHNIQUE

L'invention présente se rapporte à une soupape de limitation de pression, dont la conception est particulièrement adaptée pour les enveloppes étanches contenant de l'appareillage électrique, par exemple de coupure, et notamment pour les cellules moyenne tension.

Certaines enveloppes étanches sont exposées à la surpression de leur contenu gazeux. Cela est le cas de certains circuits électriques, qui sont le siège d'échauffements élevant la pression de leur contenu gazeux, par exemple dans des ampoules moyenne tension. Dans ce type d'enveloppe contenant un système de coupure, la pression est toutefois maintenue à une valeur modérée dans des conditions normales de fonctionnement, mais des dysfonctionnements tels des arcs électriques peuvent faire apparaître des échauffements beaucoup plus importants, dont les surpressions correspondantes risqueraient de faire exploser l'enveloppe. Le risque d'explosion peut être éliminé par des soupapes évacuant très rapidement une partie du gaz en surpression.

Un genre connu de soupapes comprend une bille maintenue par un ressort taré, qu'une surpression suffisante repousse de son siège ; ces soupapes ont un fonctionnement précis, la surpression nécessaire à l'ouverture étant bien déterminée, mais sont volumineuses en proportion du débit de gaz qu'elles laissent passer et présentent une trop forte inertie de fonctionnement.

D'autres soupapes comprennent une membrane à rupture, dont la résistance mécanique est choisie pour se rompre sous l'action de la surpression voulue. De telles membranes se déforment toutefois de façon permanente avant la rupture, ce qui peut autoriser ensuite des fuites permanentes sans rupture, et sans détection facile.

Un autre genre de soupapes, voir par exemple GB 657 255, que l'invention perfectionne, comprend des membranes à échappement. Ces membranes, généralement circulaires, planes et de faible épaisseur, sont disposées dans une couronne de support fixée à une paroi de l'enveloppe autour de l'orifice d'échappement de la surpression. Leur bord est posé sur un siège de support appartenant à la couronne et qui délimite le passage de celle-ci. La différence entre le rayon du passage de la couronne et le rayon de la membrane constitue le recouvrement, c'est-à-dire la largeur de ce bord d'appui. Sous l'action de la surpression, la membrane se déforme et s'enfonce dans le passage de la couronne, le bord d'appui glisse sur le siège, et son diamètre extérieur se réduit jusqu'à échapper au siège, ce qui produit l'ouverture de la soupape et l'expulsion de la membrane.

Si la surpression cesse immédiatement, on peut assister encore à des situations où la membrane est suffisamment déformée pour ne pas revenir complètement en appui sur le siège et laisser subsister des fuites permanentes, ce qui reste indésirable. Un autre inconvénient, pouvant être encore plus grave que le précédent, est que le glissement du bord de la membrane sur le siège n'est pas maîtrisé et qu'il est donc le plus souvent irrégulier, de sorte que l'ouverture de la membrane se produit avec une grande dispersion des valeurs de surpression, quel que soit le soin qui ait été pris à la centrer à la fabrication de la soupape. L'emploi de telles soupapes a pour conséquence que les enveloppes doivent être dimensionnées avec une sécurité plus grande, et donc alourdies et rendues plus coûteuses.

Le but essentiel de l'invention est de perfectionner ces soupapes à membrane à échappement en rendant leur fonctionnement beaucoup plus uniforme et prévisible, et aussi en rendant l'échappement complet très rapide dès que l'ouverture de la soupape a été amorcée.

L'invention concerne en général une soupape de limitation de pression, comprenant une couronne de montage à une enveloppe et autour d'un orifice de l'enveloppe, et une membrane déformable ayant un bord posé sur un siège de support appartenant à la couronne et une partie principale s'étendant devant l'orifice, caractérisée en ce que le siège possède une unique partie en dénivellation ou une pluralité de parties en dénivellation réparties sur l'étendue du siège, où s'instaure une séparation du siège et d'une portion du bord, et qui

La dénivellation favorise la déformation de la membrane à son endroit quand une surpression est produite. Le diamètre de la membrane diminue brusquement dès que cette déformation apparaît, pour une valeur assez invariable de la surpression, ce qui facilite l'ouverture presque immédiate et l'échappement de la membrane.

L'invention sera maintenant décrite à titre purement illustratif en liaison aux figures, dont :
- la figure 1 est une vue en coupe d'une soupape à membrane au repos,
- la figure 2 est une vue de face de la même soupape,
- la figure 3 est une vue en coupe de la soupape quand la surpression apparaît,
- la figure 4 illustre les efforts exercés sur le bord devant une dénivellation,
- la figure 5, l'amorce de l'ouverture dans la représentation de la figure 4,
- la figure 6, l'amorce de l'ouverture en vue de face,
- et la figure 7, l'ouverture de la soupape en coupe.

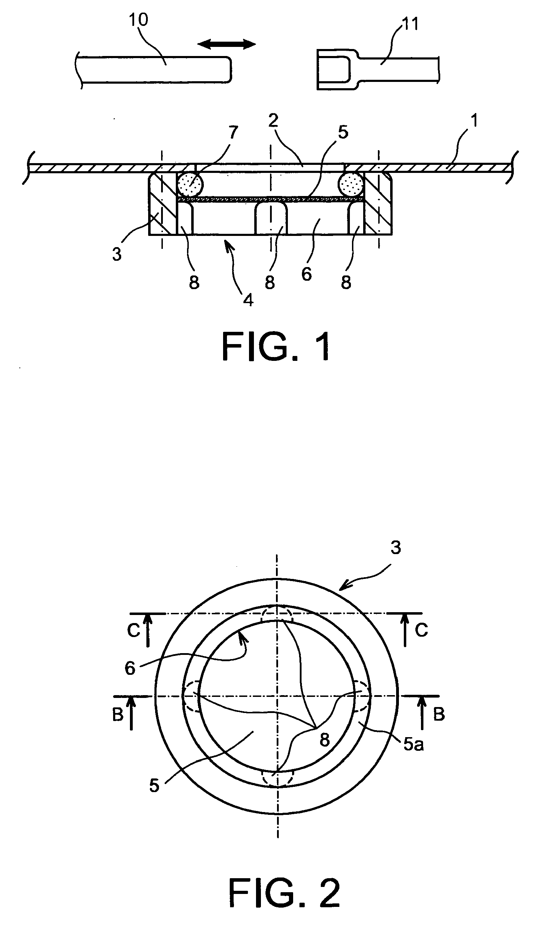

La figure 1 représente une première vue d'une soupape conforme à l'invention, montée sur une enveloppe (1) pourvue d'un orifice (2) d'éventement de surpressions, et qui comprend une couronne (3) disposée autour de l'orifice (2) et comprenant elle-même un passage (4) aligné avec l'orifice (2), et une membrane (5) obstruant l'orifice (2) et le passage (4). L'enveloppe (1) peut appartenir à un appareillage électrique à cellule étanche, contenant un gaz sous pression contrôlée tel que l'air sec, le SF₆ ou le CO₂, ou un autre gaz diélectrique, et contenant encore deux contacts (10, 11) électriques mobiles l'un par rapport à l'autre pour s'ouvrir ou se fermer à volonté; la représentation est schématique et donnée seulement afin de préciser une application préférée de l'invention, de tels appareillages électriques étant bien connus et l'invention pouvant généralement être appliqué à tous. Des arcs électriques peuvent apparaître entre les contacts (10, 11), échauffer le contenu gazeux de l'enveloppe (1) et le mettre en surpression. La membrane (5) est plane, circulaire et d'épaisseur régulière, et posée par un bord (5a) sur un siège (6) de la couronne (3) dans le sens extérieur à l'enveloppe (1) correspondant à l'échappement. L'étanchéité est assurée par un joint (7) comprimé entre l'enveloppe (1) et la face interne de la membrane (5), dans le prolongement du siège (6).

On voit mieux à la figure 2 que le siège (6), circulaire et plan en général, comprend au moins une dénivellation (8) à sa face d'appui du bord (5a) ; les dénivellations (8) sont ici au nombre de quatre et régulièrement réparties sur la circonférence en s'étendant sur des secteurs angulaires respectifs, mais leur nombre et leur répartition ne sont pas critiques sur les caractéristiques de fonctionnement de la soupape, et permettent une plus grande uniformité des valeurs de surpression d'ouverture; elles sont ici des évidements traversant complètement le siège (6) jusqu'à sa face extérieure, ce qui n'est pas critique non plus.

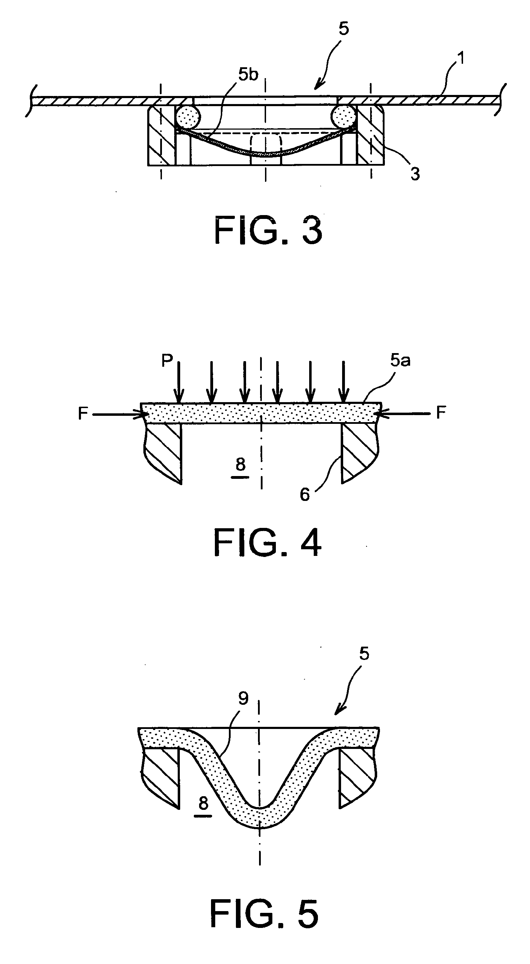

Quand une surpression apparaît dans une enveloppe (1), la figure 3 montre que la membrane (5) fléchit à sa partie principale (5b) - complémentaire du bord (5a) et obstruant le passage (4) - tout comme une membrane à échappement classique, mais la figure 4 montre que la surpression (P) s'exerce au bord (5a) de la membrane (5) au-dessus des dénivellations (8) en fléchissant la partie correspondante du bord (5a), et que cette flexion est complétée par des efforts de compression (F) en direction tangentielle consécutifs à la flexion de la partie principale (5b) de la membrane (5) et à la contraction de rayon qui en est le corollaire.

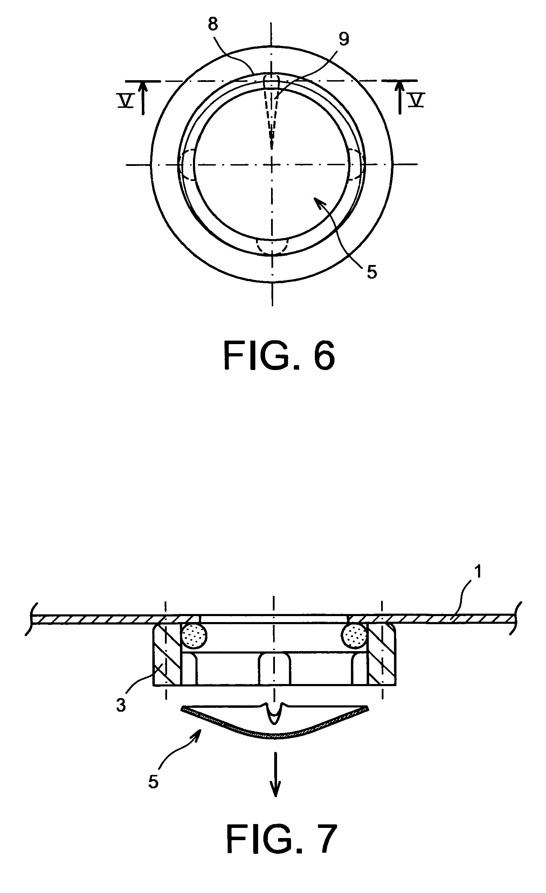

Ce double état de contrainte produit un flambement au-dessus des dénivellations (8) et amorce la déformation de la membrane (5), ce que l'on a représenté aux figures 5 et 6 : des plis (9) de forme angulaire apparaissent sur la membrane (5) aux secteurs angulaires correspondant aux dénivellations (8) (ou à une seule d'entre elles), ce qui provoque une contraction immédiate en rayon de la membrane (5) et son échappement (figure 7). L'état de la membrane (5) étant instable quand le flambement se manifeste, l'échappement est très rapide, et de plus le seuil de flambement est assez peu variable pour des soupapes supposées identiques ; sa valeur peut évidemment être ajustée en faisant varier les paramètres d'épaisseur de la membrane (5) et de largeur des dénivellations (8).

Bien qu'utilisable dans tous les domaines, notamment pour les appareillages électriques, la soupape est particulièrement appropriée pour des enveloppes étanches de matériel de coupure. De ce fait, notamment dans les applications moyenne tension, le terme « moyenne tension » (MT) étant utilisé dans son acceptation habituelle, à savoir que MT désigne une tension qui est supérieure à 1 000 volts en courant alternatif et à 1 500 volts en courant continu mais qui ne dépasse pas 52 000 volts en courant alternatif et 75 000 volts en courant continu, un système de coupure, comprenant une paire de contacts mobiles relativement l'un à l'autre entre une position fermée de passage de courant et une position ouverte de coupure, peut être mis en place dans une enveloppe à atmosphère contrôlée. Dans certaines conditions de coupure, l'arc électrique produit peut générer une surpression dommageable pour l'enveloppe. La soupape selon l'invention permet alors d'éviter le risque d'explosion, en maîtrisant les surpressions; grâce à cette protection, le dimensionnement de l'enveloppe étanche peut être optimisé, en réduisant les coûts et en améliorant la fiabilité du fonctionnement.

Dans un exemple effectif où des essais de la membrane (5) donnèrent de bons résultats, la membrane (5) avait une épaisseur de 0,4 mm et un diamètre de 125 mm, et elle était en acier inoxydable. Le siège (6) était compris entre des rayons de 60,5 et 62,5 mm. Une dénivellation (8) unique existait, et elle avait une forme de portion de cercle, de 3 mm de diamètre s'étendant entre les rayons de 60,5 et 61,5 mm, tangente au rayon de 61,5 mm et ouverte vers l'intérieur du passage (4). La surpression de rupture constatée fut de 1,38 bar en moyenne, avec un écart-type de 0,037 bar, pour une exigence de rupture à une valeur comprise entre 0,8 bar et 1,7 bar de surpression de l'intérieur de l'enveloppe (1), ce qui signifie que la pression de rupture sera toujours entre ces limites en pratique. La couronne (3) et le siège (6) peuvent être en toute matière usuelle, métallique ou en polymère thermodurcissable par exemple ; ils peuvent être une pièce unitaire ou non.

## Revendications

1. Soupape de limitation de pression, comprenant une couronne (3) de montage à une enveloppe (1) et autour d'un orifice (2) de l'enveloppe, et une membrane (5) déformable ayant un bord (5a) posé sur un siège (6) de support appartenant à la couronne et une partie principale (5b) s'étendant devant l'orifice, **caractérisée en ce que** le siège possède une unique partie en dénivellation ou une pluralité de parties en dénivellation (8) réparties sur l'étendue du siège, où s'instaure une séparation du siège (6) et d'une portion du bord (5a), la ou les dénivellations favorisant la déformation de la membrane à son ou leur endroit quand une surpression est produite, le diamètre de la membrane diminuant dès que cette déformation apparaît afin de faciliter l'ouverture et l'échappement de la membrane.

2. Soupape de limitation de pression suivant la revendication 1, **caractérisée en ce que** la membrane et le siège sont circulaires et plans, hormis à la dénivellation.

3. Enveloppe (1) étanche contenant un gaz sous pression contrôlée, et comprenant une soupape selon l'une des revendications 1 ou 2 montée sur un orifice (2) de l'enveloppe.

4. Appareil de coupure électrique comprenant une paire de contacts (10, 11) mobiles relativement l'un par rapport à l'autre, une enveloppe (1) logeant ladite paire de contacts, et une soupape selon l'une quelconque des revendications 1 ou 2 montée sur l'enveloppe.

5. Appareil de coupure électrique selon la revendication 4, **caractérisé en ce qu'**il est une cellule étanche contenant un gaz à pression contrôlée et à moyenne tension.

6. Enveloppe étanche selon la revendication 3 ou appareil de coupure selon la revendication 4 dans lequel la soupape est adaptée pour résister à un différentiel de pression de l'ordre de 0,8 à 1,7 bars.

## Patentansprüche

1. Druckbegrenzungsventil, enthaltend einen Kranz (3) zum Anbringen an einem Mantel (1) und um eine Öffnung (2) des Mantels herum, sowie eine verformbare Membran (5) mit einem Rand (5a), der an einen Haltesitz (6) angesetzt ist, der zu dem Kranz gehört, und mit einem Hauptabschnitt (5b), der sich vor der Öffnung erstreckt,
**dadurch gekennzeichnet, dass**
der Sitz einen einzigen in der Höhe abweichenden Abschnitt oder eine Mehrzahl von in der Höhe abweichenden Abschnitten (8) besitzt, die über die Erstreckung des Sitzes verteilt sind, wo eine Trennung von Sitz (6) und einem Randbereich (5a) entsteht, wobei die Höhenabweichung bzw. die Höhenabweichungen die Verformung der Membran an ihrer Stelle dann begünstigt bzw. begünstigen, wenn ein Überdruck erzeugt wird, wobei der Durchmesser der Membran abnimmt, sobald diese Verformung auftritt, damit das Öffnen und das Austreten aus der Membran erleichtert wird.

2. Druckbegrenzungsventil nach Anspruch 1,
**dadurch gekennzeichnet, dass** die Membran und der Sitz kreisförmig und, abgesehen von der Höhenabweichung, flach sind.

3. Abgedichteter Mantel (1), enthaltend ein Gas unter kontrolliertem Druck und ein Ventil nach einem der Ansprüche 1 oder 2, das an einer Öffnung (2) des Mantels angebracht ist.

4. Elektrisches Schaltgerät, enthaltend ein Paar von Kontakten (10, 11), die zueinander beweglich sind, einen Mantel (1), der das Paar von Kontakten aufnimmt, und ein Ventil nach einem der Ansprüche 1 oder 2, das am Mantel angebracht ist.

5. Elektrisches Schaltgerät nach Anspruch 4,
**dadurch gekennzeichnet, dass** es eine abgedichtete Mittelspannungszelle ist, die ein Gas unter kontrolliertem Druck enthält.

6. Abgedichteter Mantel nach Anspruch 3 bzw. Schaltgerät nach Anspruch 4, wobei das Ventil dazu geeignet ist, einer Druckdifferenz in der Größenordnung von 0,8 bis 1,7 bar standzuhalten.

## Claims

1. Pressure limiting valve, comprising a crown (3) for mounting to a casing (1) and around a port (2) of the casing, and a deformable diaphragm (5) having an edge (5a) placed on a support seat (6) belonging to the crown and a main part (5b) extending in front of the port, **characterised in that** the seat has one part different in level or a plurality of parts (8) different in level spread out over its span where is established a separation of the seat (6) and a portion of the edge (5a), the part or parts different in level favouring the deformation of the diaphragm at their location when an overpressure is produced, the diameter of the diaphragm reducing as soon as this deformation appears in order to facilitate the opening and the exhaust of the diaphragm.

2. Pressure limiting valve according to claim 1, **characterised in that** the diaphragm and the seat are circular and flat, apart from the difference in level.

3. Sealed casing (1) containing a gas under controlled pressure, and comprising a valve according to one of claims 1 or 2 mounted on a port (2) of the casing.

4. Electrical cut-off device comprising a pair of contacts (10, 11) moveable relative to each other, a casing (1) housing said pair of contacts, and a valve according to any of claims 1 or 2 mounted on the casing.

5. Electrical cut-off device according to claim 4, **characterised in that** it is a sealed cell containing a gas at controlled pressure and at medium voltage.

6. Sealed casing according to claim 3 or cut-off device according to claim 4 in which the valve is adapted to withstand a pressure differential of the order of 0.8 to 1.7 bars.
